# EUROPÄISCHE PATENTANMELDUNG

(11) **EP 2 538 011 A1**
(43) Veröffentlichungstag der Anmeldung: **26.12.2012**
(21) Anmeldenummer: 11171029.9
(22) Anmeldetag: 22.06.2011
(51) Int. Cl.: E06B 3/30, B29D 23/00, B29C 47/00

(54) **PVC-Hohlkammerprofil und Verwendung**

(71) Anmelder: profine GmbH, 53840 Troisdorf (DE)
(72) Erfinder: Eger, Arno, 66987 Thaleischweiler-Fröschen (DE)
(74) Vertreter: Wübken, Ludger

(57) **Zusammenfassung**

Die Erfindung betrifft Verwendung eines extrudierten Hohlkammerprofils auf der Basis einer TiO₂ enthaltenden PVC-Rezeptur zur Herstellung von der Bewitterung ausgesetzten Gebäudebestandteilen, insbesondere von Fenstern und Türen. Zur Verbesserung der Witterungsbeständigkeit bei dauerhaftem Glanzgrad wird vorgeschlagen, dass die Hohlkammerprofile einen TiO2-Gehalt < 4,5 Gew.-% aufweisen und wenigstens an den der Bewitterung ausgesetzten Flächen mit einem weißen oder klaren, einen UV-Absorber aufweisenden Lack beschichtet sind.

## Beschreibung

### Technisches Gebiet und Stand der Technik

Hohlkammerprofile für die Herstellung von Fenstern und Türen werden in großem Umfang aus PVC-Formmassen extrudiert. PVC wird allerdings unter dem Einfluss von UV-Einstrahlung abgebaut. Um den Abbau von PVC zu verzögern, ist es üblich, stabilisiertes Titandioxid zuzusetzen. Der Zusatz von höheren Mengen Titandioxid verzögert die Vergilbung der Profile, ist jedoch sehr teuer. Weiterhin führt ein hoher Titandioxidgehalt dazu, dass ein ausreichend hoher Glanzgrad nur schwer zu erreichen ist.

In Gegenden mit relativ geringer Sonneneinstrahlung reicht ein Titandioxidgehalt von ca. 4 Gew.-% aus, um einerseits einen ausreichenden UV-Schutz zu erreichen und andererseits einen ausreichend hohen, zeitlich relativ konstanten Glanzgrad der Profiloberfläche zu ermöglichen.

In sogenannten Heißländern, das sind Länder mit einer jährlichen Gesamt-Sonneneinstrahlung, also der durchschnittlich in einem Jahr durch von der Sonne im gesamten Frequenzspektrum einfallende Strahlungsenergie, von mehr als 1600 [kWh/m²] führt ein geringer Titandioxidanteil allerdings zu vorzeitigem Abbau des PVC-Polymers auf der Oberfläche. In trockenem heißem Klima kommt es zur Vergilbung durch Bildung von Polyensequenzen (konjugierten Doppelbindungen). Die Verfärbung nimmt mit der Dauer der Bestrahlung zu. In feuchtem heißem Klima werden die Polyensequenzen durch die photokatalytische Wirkung des Titandioxids oxydiert was sich als sogenanntes Auskreiden bemerkbar macht. Die Auskreidung führt dabei zu einem entsprechenden Glanzverlust.

### Aufgabe

Aufgabe der vorliegenden Erfindung ist es daher, PVC-Profile zum Einsatz in Heißländern zur Verfügung zu stellen, die einerseits dauerhaft einen gewünschten Glanzgrad aufweisen und andererseits eine hohe Witterungsbeständigkeit.

### Darstellung der Erfindung

Die Erfindung löst diese Aufgabe durch ein extrudiertes Hohlkammerprofil auf der Basis einer Ti02 enthaltenden PVC-Rezeptur mit einen Ti02-Gehalt < 4,5 Gew.-%, das wenigstens in Teilbereichen der Oberfläche mit einem weißen oder klaren, einen UV-Absorber aufweisenden Lack beschichtet ist.

Nach einer bevorzugten Ausführungsform der Erfindung beträgt der TiO₂-Gehalt der extrudierten Hohlkammerprofile weniger als 4,2 Gew.-%.

Der Glanzgrad nach DIN 67530, gemessen unter einem Winkel von 60°, beträgt bevorzugt mindestens 50.

Die erfindungsgemäßen extrudierten Hohlkammerprofile werden zur Herstellung von der Bewitterung ausgesetzten Gebäudebestandteilen, insbesondere von Fenstern und Türen, verwendet, insbesondere an Orten, die eine durchschnittliche jährliche Gesamt-Sonneneinstrahlung von mehr als > 1600 kWh/m² aufweisen.

## Patentansprüche

1. Verwendung eines extrudierten Hohlkammerprofils auf der Basis einer TiO₂ enthaltenden PVC-Rezeptur zur Herstellung von der Bewitterung ausgesetzten Gebäudebestandteilen, insbesondere von Fenstern und Türen, ***dadurch gekennzeichnet, dass*** die Hohlkammerprofile einen TiO₂-Gehalt < 4,5 Gew.-% aufweisen und wenigstens an den der Bewitterung ausgesetzten Flächen mit einem weißen oder klaren, einen UV-Absorber aufweisenden Lack beschichtet sind.

2. Verwendung nach Anspruch 1, ***dadurch gekennzeichnet, dass*** die extrudierten Hohlkammerprofile einen TiO₂-Gehalt < 4,2 Gew.-% aufweisen.

3. Verwendung nach Anspruch 1 oder 2, ***gekennzeichnet durch*** einen Glanzgrad > 50 nach DIN 67530, gemessen unter einem Winkel von 60°.

4. Verwendung nach einem der Ansprüche 1 bis 3, ***dadurch gekennzeichnet*, *dass*** an dem Ort der Verwendung die durchschnittliche jährliche Gesamt-Sonneneinstrahlung eine Intensität > 1600 kWh/m² aufweist.

5. Verwendung nach Anspruch 4, ***dadurch gekennzeichnet, dass*** an dem Ort der Verwendung die durchschnittliche jährliche Gesamt-Sonneneinstrahlung einen Intensität > 1700 kWh/m² aufweist.

6. Extrudiertes Hohlkammerprofil auf der Basis einer TiO₂ enthaltenden PVC-Rezeptur zur Herstellung von der Bewitterung ausgesetzten Gebäudebestandteilen, insbesondere von Fenstern und Türen, ***dadurch gekennzeichnet, dass*** das Hohlkammerprofil einen TiO₂-Gehalt < 4,5 Gew.-% aufweist und wenigstens in Teilbereichen der Oberfläche mit einem weißen oder klaren, einen UV-Absorber aufweisenden Lack beschichtet ist.

7. Extrudiertes Hohlkammerprofil nach Anspruch 6, ***gekennzeichnet durch*** einen Glanzgrad > 50 nach DIN 67530, gemessen unter einem Winkel von 60°.
